# EUROPEAN PATENT APPLICATION

(11) **EP 2 508 712 A2**
(43) Date of publication of application: **10.10.2012**
(21) Application number: 12159280.2
(22) Date of filing: 13.03.2012
(51) Int. Cl.: F01D 5/28

(54) **A component having an erosion-resistant layer**

(30) Priority: 05.04.2011 GB 201105712
(71) Applicant: Rolls-Royce plc, London SW1E 6AT (GB)
(72) Inventor: Williams, David Anthony, Bristol, BS7 9HW (GB)
(74) Representative: Roberts, Nicholas John

(57) **Abstract**

A composite component such as a blade or vane of a gas turbine engine comprises a body 2 and an erosion-resistant layer 4. The body 2 comprises a fibre reinforcement in a resin matrix, and the erosion-resistant layer 4 comprises a 3-D woven fabric element which is also resin-impregnated. The woven fabric element is made from a thermoplastics material such as PEEK, and may be thicker at the leading edge 6 of the component than at pressure and suction surfaces 8, 10. The component may be manufactured in a laying-up process in which the woven fabric element of the erosion-resistant layer 4 is placed in a mould with the resin-impregnated fibre reinforcement of the body 2 so that the resin of the body 2 migrates into the woven fabric element of the erosion-resistant layer 4.

## Description

This invention relates to a component having an external erosion-resistant layer, and is particularly, although not exclusively, concerned with such components in the form of aerofoils, such as vanes and blades in gas turbine engines.

Some gas turbine engine aerofoils are made from composite materials. A problem with such materials is that they have poor erosion performance and so are easily damaged by sand, rain and other solid or liquid particles impinging on them, as well as by larger objects which may enter the intake of the engine and cause foreign object damage (FOD).

In order to avoid such erosion and FOD, it is known to provide composite aerofoil components, such as vanes, with metallic strips at their leading edges. Metallic materials are often incompatible with composite materials, and it is difficult to bond them successfully to composite materials. Furthermore, high thermal strains occur between the metal and the underlying composite material, which serve to weaken the bond still further. Also, owing to manufacturing restrictions, such strips can be applied only at the leading edge itself and the immediately surrounding region. However, erosion damage can also occur along the sides of the aerofoil and it is known to apply a coating of a suitable material, such as polyurethane, to the aerofoil sides to reduce this damage.

US 5449273 discloses a composite aerofoil having an erosion-resistant layer at its leading edge which is formed from a wire mesh coated with an erosion-resistant coating. The erosion-resistant coating may be nickel, titanium nitride or titanium diboride, and leaves open the mesh voids so that resin from the composite body of the aerofoil can penetrate the voids to lock the mesh in place. It is nevertheless possible for FOD to result in detachment of all or part of the mesh, which can then cause further damage during passage through the engine. Furthermore, wire mesh is essentially a single-layer material, with the result that the thickness of the resulting erosion-resistant layer is constant over its full extent. The use of a wire mesh layer consequently does not provide the flexibility to achieve different thickness of the erosion-resistant layer in different regions of the outer surface of the aerofoil.

According to the present invention there is provided a component comprising a body of a composite material provided with an erosion-resistant layer extending over at least part of the surface of the body, the erosion-resistant layer comprising a resin-impregnated woven fabric element formed from fibres of a thermoplastics material. Although the invention is described primarily with respect to weaving the term "weaving" includes braiding.

Any suitable thermoplastics material having a high erosion resistance may be used. In a particular embodiment, the thermoplastics material is polyether ether ketone (PEEK).

The woven fabric element may be a 3-D woven element. The expression "3-D weaving" and related expressions in this specification signify a weaving process in which a layered structure is built up, the layers being interconnected by fibres which extend between layers. Thus, if a conventional 2-D woven fabric is considered to comprise warp and weft fibres which lie substantially in a common horizontal plane, 3-D weaving produces woven products which have two or more superposed layers of warp and weft fibres which are interconnected by additional weft fibres extending in the vertical direction.

The weave of the woven fabric element may be a satin weave, such as a standard 8 harness satin weave. By suitable control of the weaving process, the thickness of the woven product can be varied over its extent, and consequently the woven fabric element may be of varying thickness.

The body of the component may comprise a laminated structure formed from layers of fibre reinforcement in a resin matrix. The woven fabric element of the erosion-resistant layer may be impregnated with the resin of the resin matrix.

The component may be an aerofoil component, for example a vane or blade of a gas turbine engine. In such an aerofoil component, the woven fabric element may be provided on the body at least in the region of the component which includes the leading edge of the aerofoil. Additionally, the woven fabric element may extend also over at least part of one or both of the pressure and suction surfaces of the aerofoil. The woven fabric element may be thicker in the region of the leading edge than over the pressure and/or suction surface.

The present invention also provides a method of manufacturing a component comprising:
(i) laying-up a fibre reinforcement and a woven fabric element, the woven fabric element being made from a thermoplastics material and being situated at the outside of the fibre reinforcement;
(ii) impregnating the fibre reinforcement and the woven fabric element with a curable resin; and
(iii) causing or allowing the resin to cure.

The fibre reinforcement may comprise prepregs, i.e. reinforcing fibres which are impregnated with the resin prior to laying-up the fibre reinforcement. The resin of the fibre reinforcement may then migrate into the woven fabric element following lay-up and before or during curing of the resin.

During curing, the resin impregnated fibre reinforcement may be subjected to heat and pressure within a mould.

For a better understanding of the present invention, and to show more clearly how it may be carried into effect, reference will now be made, by way of example, to the accompanying drawings, in which:
Figure 1 is a schematic partial sectional view of a vane of a gas turbine engine;
   and
Figure 2 is a schematic representation of a woven fabric; and
Figure 3a, 3b depicts a woven sheet with a local thickening during one stage of manufacture of the vane; and
Figure 4 depicts a woven sheet with a local thickening during one stage of an alternative manufacture of the vane.

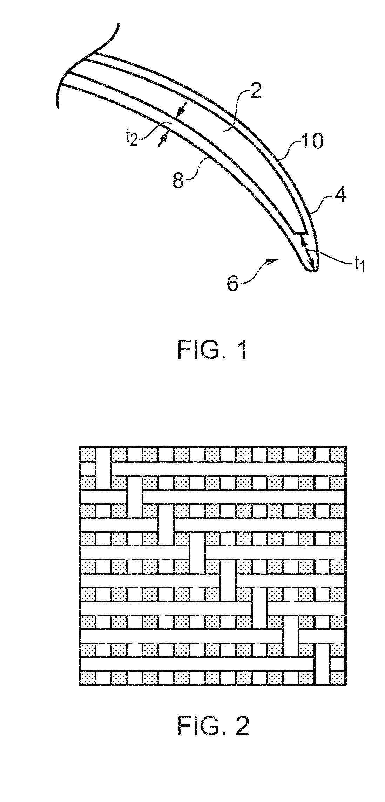

The vane shown in Figure 1 comprises a body 2 of a composite material, over which is provided an erosion-resistant layer 4.

The body 2 may comprise a laminate constructed from layers of fibre reinforcement, for example of carbon or glass fibre, embedded in a resin matrix. The erosion-resistant layer 4 comprises a woven fabric element which extends at least over the leading edge region 6 of the component although, as shown in Figure 1, it may extend also over the pressure side 8 and/or the suction side 10 of the aerofoil. The erosion-resistant layer 4 may extend over the full surface of the aerofoil, that is to say it may cover the whole of the body 2 as seen in cross-section, although it may alternatively terminate short of the trailing edge (not shown in Figure 1) of the aerofoil. It will be appreciated from Figure 1 that the thickness of the erosion-resistant layer 4 at the leading edge region 6, designated as thickness *t₁* is greater than the thickness over the pressure and suction surfaces 8, 10, designated by way of example by thickness *t₂*. Thus, the thickness of the erosion-resistant layer 4 varies over its extent. For example, in addition to having the increased thickness *t₁* at the leading edge 6, the erosion-resistant layer may vary in thickness over the extent of the pressure surface 8 and/or the suction surface 10. Also, the wear-resistant layer 4 may have a different thickness over the pressure surface 8 from the thickness over the suction surface 10.

Generally speaking, the thickness of the erosion-resistant layer 4 is greatest in those regions of the vane which are most exposed to erosion or damage. Thus, the most vulnerable part of the vane is the leading edge region 6, although the pressure surface 8 is also subjected to a scouring effect from airborne particles and raindrops. By increasing the thickness *t₁* of the erosion-resistant layer 4 in the leading edge region 6, greater tolerance of damage can be achieved before the body 2 is exposed. Consequently, the leading edge erosion capability is enhanced, and repairs can be made without compromising the erosion resistance of the erosion-resistant layer 4 as a whole. Repairs may comprise the preparation of the erosion layer 4 by removal of material, and the blending in of repair sections. The additional thickness *t₁* at the leading edge 6 enables such repairs to be effected without penetrating through the erosion-resistant layer 4 to the composite material of the body 2.

The erosion-resistant layer 4 comprises a woven fabric element which is formed separately from the body 2 in a 3-D weaving process. The woven fabric element may comprise PEEK fibres. The 3-D weaving process is performed on a 3-D loom which can be controlled to form the woven fabric element with a varying thickness corresponding to the thickness variation of the finished erosion-resistant layer 4.

Various weave patterns may be employed to create the woven fabric element, but one possible weave pattern is a satin weave, such as a standard 8 harness satin weave of the form shown in Figure 2. In such a weave, each weft fibre passes over seven warp fibres and under the eighth, and similarly each warp fibre passes over seven weft fibres and under the eighth. Such a weave has good drape qualities, and consequently can be formed smoothly over complex curves, as well as providing good erosion resistance. The woven fibre element is preferably formed as a sheet with local woven structures or thickenings 11. The fibre element is cut to the required shape and then folded and fitted against the surface of a mould.

The component is formed by laying-up the woven fabric element of the erosion-resistant layer 4 on the surface of the mould, followed by layers of the fibre reinforcement. The fibre reinforcement for the body 2 may be pre-impregnated with resin. After lay-up is complete, the mould is heated and pressure is applied to the laid-up assembly. Resin migrates from the pre-impregnated fibre reinforcement layers into the woven fibre element as curing proceeds, so ensuring that the resulting erosion-resistant layer 4 is integrated with the body 2 by the cured resin.

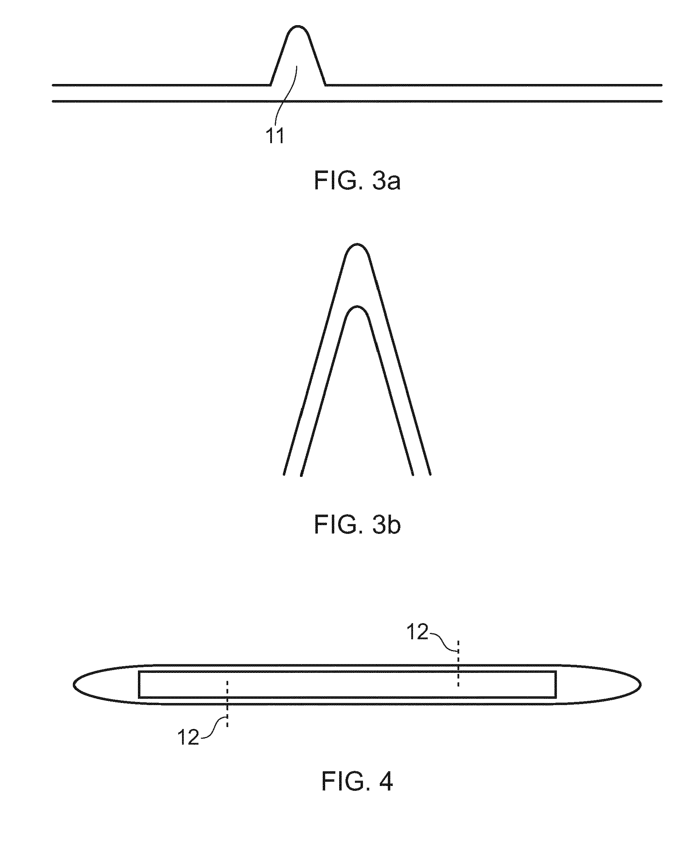

In an alternative method of manufacture the leading edge is woven as a hollow section which is depicted in Figure 4 which is may then be divided along lines 12 and 14 into two parts which can be used for the leading edge of two different aerofoils. This method is more appropriate for use in a construction which is manufactured through braiding. A splice may be required to assemble the formed fibre element to the rest of the aerofoil element.

Where the migration of the resin from the pre-impregnated fibres to the woven fibre element is deemed insufficient additional resin layers may be provided in the laid up assembly. In addition, or alternatively, the woven fibre element may also be pre-impregnated with a resin.

In a specific embodiment, the thickness *t₁* at the leading edge 6 may be in the range 0.5 mm to 5 mm, for example in a range from 2 mm to 3 mm. The thickness of the erosion-resistant layer 4 at the pressure and suction surfaces 8, 10 should be greater than 0.3 mm in order to provide effective erosion protection, but may be thicker than 0.3 mm if permitted by aerodynamic performance requirements of the vane.

The use of PEEK for the woven fabric element of the erosion-resistant layer 4 provides effective erosion resistance owing to the toughness of PEEK. Furthermore, PEEK, unlike other polymeric materials sometimes used as erosion coatings, is inert under the conditions prevailing in a gas turbine engine, and consequently PEEK particles eroded from the vane do not degrade into compounds which can have a destructive effect on downstream components of the engine. Also, the material properties of PEEK are such that even relatively large fragments becoming detached will cause minimal damage to downstream components by comparison with fragments of a metal erosion protection strip of similar size.

The present invention thus provides a relatively easy and reliable way of providing erosion resistance to a component such as a gas turbine engine vane or blade. The woven fabric element is incorporated as part of the laying-up process of the component without any requirement for manual preforming. Since the woven fabric element can be shaped so as to extend down the pressure and suction surfaces 8, 10 of the vane as shown in Figure 1, no separate measures need be taken to provide erosion protection in these regions. PEEK has a lower density than other polymeric or metallic materials commonly used for erosion protection, and consequently its use can result in weight saving.

Although the present invention has been described with reference to a vane of a gas turbine engine, it will be appreciated that it can be applied also to other composite components which are used in an environment where impact damage and erosion are likely to occur. Also, although the woven fabric element is described as being formed from fibres, this term should be understood as including fibres arranged together in the form of yarns or tows.

The manufacturing process has been described as enabling resin from prepregs to migrate into the woven fabric element. In alternative manufacturing processes, resin transfer moulding techniques may be used, in which resin is supplied to the mould from an external source to impregnate the woven fabric element and/or the fibre reinforcement of the body 2.

## Claims

1. A component comprising a body (2) of a composite material provided with an external erosion-resistant layer (4) extending over at least part of the surface of the body, **characterised in that** the erosion-resistant layer comprising a resin-impregnated woven fabric element formed from fibres of a thermoplastics material.

2. A component as claimed in claim 1, in which the thermoplastics material is polyether ether ketone (PEEK).

3. A component as claimed in claim 1 or 2, in which the woven fabric element comprises a satin weave.

4. A component as claimed in any one of the preceding claims, in which the woven fabric element comprises a 3-D woven element.

5. A component as claimed in claim 4, in which the woven fabric element has a varying thickness.

6. A component as claimed in any one of the preceding claims, in which the body is a laminated structure comprising layers of fibre reinforcement in a resin matrix, in which the woven fabric element is impregnated with the resin of the resin matrix.

7. A component as claimed in any one of the preceding claims, which is an aerofoil component.

8. A component as claimed in claim 7, in which the woven fabric element is provided on the body at at least a leading edge of the aerofoil component.

9. A component as claimed in claim 8, in which the woven fabric element extends over at least part of at least one of the pressure and suction surfaces of the aerofoil component.

10. A component as claimed in claim 8 or 9, in which the woven fabric element is thicker in the region of the leading edge than over the pressure and suction surfaces.

11. A method of manufacturing an aerofoil component comprising:
(i) laying-up a fibre reinforcement and a woven fabric element, the woven fabric element being made from a thermoplastics material and being situated at the outside of the fibre reinforcement to provide an external surface;
(ii) impregnating the fibre reinforcement and the woven fabric element with a curable resin; and
(iii) causing or allowing the resin to cure.

12. A method as claimed in claim 11, in which the fibre reinforcement comprises reinforcing fibres impregnated with the resin prior to laying-up.

13. A method as claimed in claim 12, in which the resin of the fibre reinforcement migrates into the woven fabric element during curing.

14. A method according to any of claim 11 to claim 13 in which the woven fabric element has a varying thickness and a thicker portion is laid up about an edge of the fibre reinforcement.
